# EUROPEAN PATENT APPLICATION

(11) **EP 2 784 403 A2**
(43) Date of publication of application: **01.10.2014**
(21) Application number: 14158314.6
(22) Date of filing: 07.03.2014
(51) Int. Cl.: F24D 19/00, F24D 19/10, F16K 31/00, G05D 23/02

(54) **Radiator arrangement**

(30) Priority: 26.03.2013 FI 20135291
(71) Applicant: Rettig ICC B.V., 6199 AA Maastricht-Airport (NL)
(72) Inventor: Arvidsson, Thomas, 341 35 Ljungby (SE); Iivonen, Mikko, 00630 Helsinki (FI); Naumann, Jens, 08451 Crimmitschau (DE)
(74) Representative: Kolster Oy Ab

(57) **Abstract**

The invention relates to a radiator arrangement comprising at least two radiator plates (2, 3); a valve fitting (4) opening into each radiator plate for delivering heat transfer liquid to the radiator plate; a valve fitting (5) discharging heat transfer liquid from each radiator plate; a thermostat (7) arranged to control opening and closing of the valve fitting (4) opening into the radiator plate (2); the thermostat (7) comprising a control member (8) for opening and closing a valve stem of the valve fitting (4) connected with the thermostat (7), and the thermostat controlling hydraulically one or more other valves (11) of the radiator, in addition to a valve (6) controlled thereby directly.

## Description

### Background of the invention

The invention relates to a radiator arrangement comprising at least two radiator plates connected with one another through heat transfer liquid; a valve fitting opening into each radiator plate for delivering heat transfer liquid to the radiator plate; a valve fitting discharging heat transfer liquid from each radiator plate; a thermostat arranged to control opening and closing of the valve fitting opening into at least one radiator plate; the thermostat comprising a control member for opening and closing a valve stem of the valve fitting connected with the thermostat. Typically, the control member also includes a medium-filled pressure element sensitive to influence of heat.

A present-day trend is to produce as efficient energy saving as possible, which poses a challenge also for radiator design and the control thereof. Heat-radiating surfaces should heat a space to be heated as efficiently and economically as possible. In this sense, optimization and use of the heat-radiating surfaces are challenging in radiators having a plurality of plates and operating by heat transfer liquid circulation.

In double-plate radiators, for instance, heat radiation is most efficiently produced by a radiator plate which is directed toward the space to be heated. Therefore, it is advantageous to use and prefer this part of the radiator for controlling the liquid circulation and use the rear radiator plate at full capacity only when the capacity of the front plate does not suffice to heat a room. When liquid mainly circulates only through the front radiator plate, it is still possible to make a vast majority of the radiation heat of the radiator available for use, but the temperature of the liquid circulating through the radiator drops considerably less as compared with a situation in which the circulation takes place freely through both radiator plates.

An area of the technology used in this connection that is in need of improvement is how the heat transfer liquid is delivered into different radiator plates and discharged from these radiator plates.

### Summary of the invention

An object of the invention is thus to provide a novel structure for controlling the radiator arrangement described above. This object is achieved by the radiator arrangement according to the invention which, according to a first main embodiment of the invention, is characterized in that a first liquid-filled element expanding in an axial direction of the valve stem is arranged between the control member of the thermostat and the valve stem of the valve fitting connected therewith; a second liquid-filled element expanding in the axial direction of the valve stem is arranged on top of the valve stem of the valve fitting opening into at least one second radiator plate and/or the valve stem of the valve fitting discharging heat transfer liquid from at least one second radiator plate; and a liquid line is connected between the expanding elements which enables a reciprocating liquid flow therebetween for alternately expanding and contracting the expanding elements and thus for opening and closing, controlled by the thermostat, at least one valve fitting of said second radiator plate. This may be called indirect control, since even if herein, too, the control member of the thermostat may include a liquid-filled pressure element sensitive to the influence of heat, it is not used herein directly for controlling a second expanding element. An advantage then is that when applying the invention to existing thermostats, no changes need be made.

A second main embodiment of the invention, which may be called direct control, is, in turn, characterized in that a liquid-filled element expanding in an axial direction of the valve stem is arranged on top of the valve stem of the valve fitting opening into at least one second radiator plate and/or the valve stem of the valve fitting discharging heat transfer liquid from at least one second radiator plate; and a liquid line is connected between the liquid-filled pressure element of the thermostat and the expanding element which enables a reciprocating liquid flow therebetween for expanding or contracting the pressure element and the expanding element and thus for opening and closing, controlled by the thermostat, at least one valve fitting of said second radiator plate. Herein, as distinct from the first main embodiment, the liquid-filled pressure element is thus used directly for controlling the expanding element. Usually, this requires a dedicated thermostat but, at the same time, use of the first expanding element is avoided.

The invention is based on the idea of applying in a radiator system a hydraulic slave valve control wherein a thermostat and a valve arrangement directly connected thereto are also used at the same time for controlling in a desired manner the opening and closing of a valve/valves provided in at least one second radiator plate.

Preferably, in the first main embodiment, the first expanding element is arranged inside a plunger cup open in a direction of the valve stem of the valve provided in the valve fitting connected thereto and being movable in a support sleeve axially arranged between the valve and the plunger cup, the control member of the thermostat being in engagement with a plunger surface of the plunger cup facing away from the valve stem; and the second expanding element is arranged inside a dome open in a direction of the valve stem of a valve provided in the valve fitting connected thereto and fastened immovably on top of the valve fitting.

Preferably, in the second main embodiment, its expanding element is arranged inside a dome open in a direction of the valve stem of a valve provided in the valve fitting connected thereto and fastened immovably on top of the valve fitting.

In the both main embodiments, the expanding element controlled by the thermostat and located at a distance therefrom is arranged on top of the valve stem of the valve provided in the valve fitting discharging heat transfer liquid from the second radiator plate. Typically, it may reside on top of a stop valve provided in a discharge fitting of the rear radiator plate of a double-plate radiator.

Preferably, the aforementioned "expanding" elements (which, of course, may correspondingly contract, as is understood from the context) are bellows structures or, optionally, cylinders moving within and sealed with respect to one another. The only crucial point is that they can be made pressure-resistant and liquid-proof so that when one element undergoes contraction, the other element undergoes expansion of exactly the same magnitude, which may open or close the valve in question as desired.

Although the invention will be described in the following in connection with a double-plate radiator, in which case the radiator plates are located in parallel, the invention may also be applied to arrangements wherein the radiator plates reside on top of one another or side by side. One thermostat may also be used for controlling a plurality of valves that may reside in a plurality of radiator plates, in which case the thermostat is connected with a number of control lines corresponding to the number of valves to be controlled. Further, it is to be noted that the valve to be controlled does not have to be the stop valve of the second radiator plate but the valve to be controlled may be another radiator valve delivering heat transfer liquid to the second radiator plate.

### List of figures

The invention is now described in closer detail in connection with a conventional double-plate radiator and with reference to the accompanying drawings, in which
Figure 1 is a simplified schematic view showing an arrangement according to a first main embodiment of the invention;
Figure 2 shows a bellows structure associated with the first main embodiment of the invention in connection with a radiator valve ;
Figure 3 is a simplified schematic view showing an arrangement according to a second main embodiment of the invention;
Figure 4 shows a bellows structure connected with a stop valve of a second radiator plate in both main embodiments.

### Detailed description of the invention

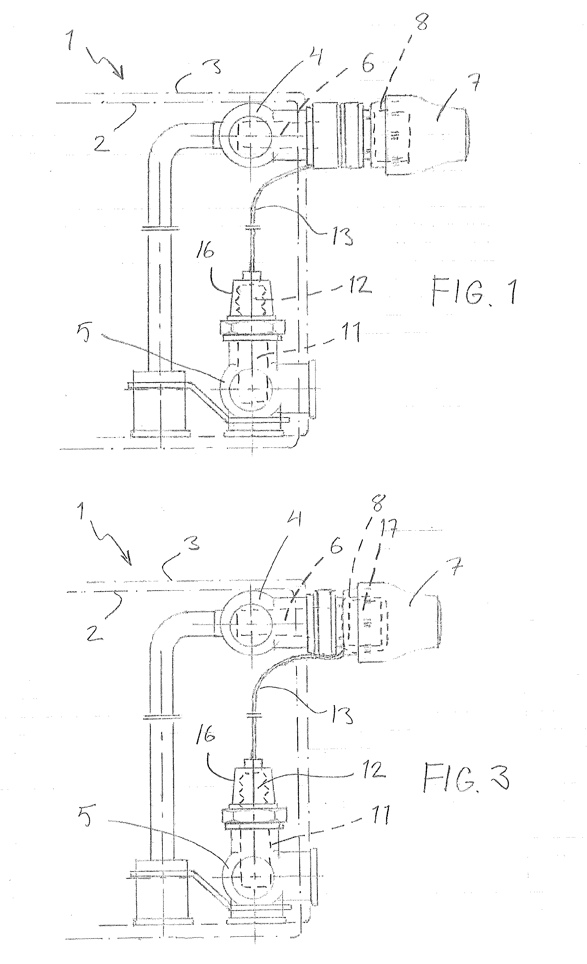

Referring to Figures 1, 2 and 4, a radiator 1 according to the invention is provided with a front radiator plate 2, typically designed to face a space to be heated, and a rear radiator plate 3, typically designed to reside behind the front radiator plate 2, on the side of a wall or a corresponding fastening surface of the space to be heated. Ordinarily, one upper corner of the radiator 1, between the radiator plates 2 and 3, is provided with a valve fitting 4 opening into the both radiator plates 2 and 3 for delivering heat transfer liquid to the radiator 1. Ordinarily, the other upper corner (not shown in the figure) of the radiator 1, between the radiator plates 2 and 3, is further provided with a valve fitting for enabling a flow of the heat transfer liquid between the radiator plates 2 and 3. This is irrelevant to the invention. One lower corner of the radiator 1, in turn, is provided with a valve fitting 5 located between the radiator plates 2 and 3 for discharging heat transfer liquid from the radiator 1. The other lower corner (not shown in the figure, either) may only be provided with a junction piece for the radiator plates 2 and 3 with no liquid connection between the radiator plates 2 and 3.

To the valve fitting 4 or, to be more precise, to a radiator valve 6 mounted thereto, is fastened a thermostat 7 whose control member 8 controls opening and closing of the radiator valve 6 or, to be more precise, a valve stem 9 thereof.

According to the invention, a first liquid-filled bellows structure 10 is, as distinct from a conventional arrangement, arranged between a mechanical contact point of the control member 8 of the thermostat 7 and an end of the valve stem 9 connected thereto, and a second liquid-filled bellows structure 12 is fitted on top of a stop valve 11 provided in the valve fitting 5 and controlling a discharge flow of the heat transfer liquid from the rear radiator plate 3, and between the bellows structures 10 and 12 a liquid line 13 is connected which enables a reciprocating liquid flow therebetween for alternately expanding and contracting the bellows structures 10 and 12 and thus for opening and closing, controlled by the thermostat 7, the stop valve 11 of the second radiator plate 3. The valve stem 9 of the radiator valve 6 opens through mechanical transmission of the first bellows structure 10, when the control member 8 of the thermostat 7 starts affecting the bellows structure 10 mechanically. With appropriate dimensions, this may be carried out such that the radiator valve 6 always opens first and the stop valve 11 not until the temperature of the space to be heated is e.g. about 1°C lower than a set value of the thermostat 7. The difference in temperature may, of course, vary within desired limits, depending on the heating demand.

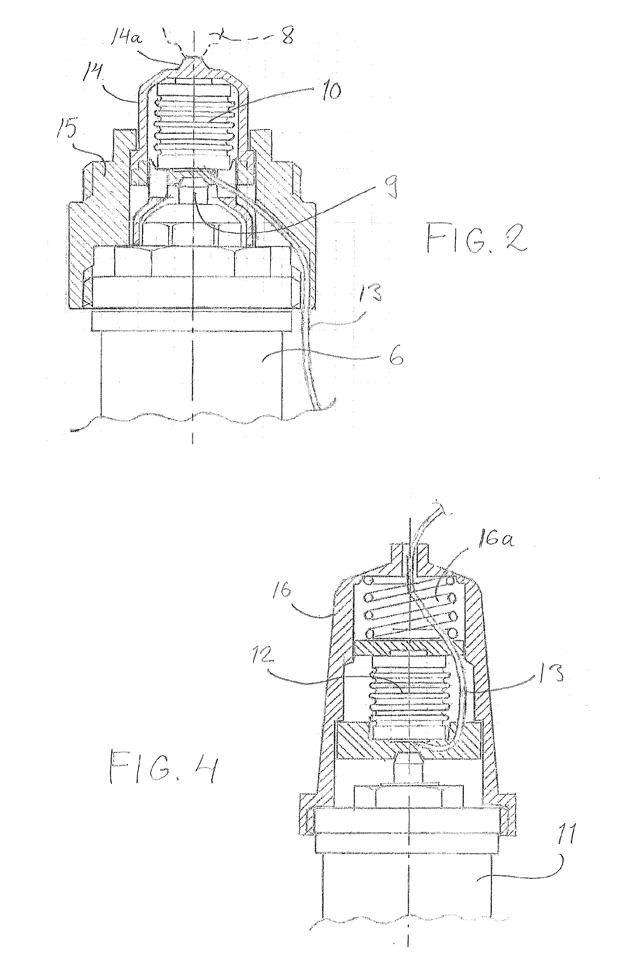

The first bellows structure 10 (Figure 2) is preferably arranged inside a plunger cup 14 open in a direction of the valve stem 9 of the radiator valve 6 and being movable in a support sleeve 15 axially arranged between the radiator valve 6 and the plunger cup 14, the the control member 8 of the thermostat 7 being in mechanical engagement with a plunger surface 14a of the plunger cup 14 facing away from the valve stem 9.

The second bellows structure 12 (Figure 4), in turn, is preferably arranged inside a dome 16 open in a direction of the valve stem of the stop valve 11 and immovably fastened on top of the valve fitting 5 or the stop valve 11. The mechanical contact of the bellows structure 12 with the valve stem of the stop valve 11 opens and closes this stop valve 11. Preferably, a spring 16a to even out possible overload is arranged between an upper end of the bellows structure 12 and an inner surface of an end of the dome 16 for preventing the structures from being damaged.

The radiator arrangement according to Figure 3 differs from the arrangement according to Figures 1 and 2 only in that the above-described first bellows structure 10 is replaced by a liquid-filled pressure element 17 sensitive to the influence of heat and typically included in or connected to the control member 8 of the thermostat 7 and constituting a normal component in most thermostats (it may also be provided in the arrangement according to Figures 1 and 2). In this way, the arrangement becomes simpler but the thermostat 7 requires modifications inter alia in order to enable the liquid line 13 to be connected to this pressure element. No spring 16a provided in connection with the bellows structure 12 is necessarily required in connection with the arrangement according to Figure 3, since such a spring is typically already provided in connection with the pressure element 17.

In this example, the stop valve 11 provided in the valve fitting 5 located in a lower part of the radiator 1 is controlled according to a given temperature difference between a set temperature of the thermostat 7 and the temperature of the space to be heated. This temperature difference may be about 1°C, for instance. The stop valve 11 is opened when the temperature of the space to be heated is lower than the set value of the thermostat by a selected temperature difference. When the temperature difference is smaller, the stop valve 11 is closed, and the heat transfer liquid then again circulates only through the front radiator plate 2. Of course, this is only one possible use for the solution according to the invention, as has already been explained above.

The above description of the invention is thus only intended to illustrate the basic idea of the invention. A person skilled in the art may thus vary and apply its details within the scope of the attached claims.

## Claims

1. A radiator arrangement, comprising
at least two radiator plates (2, 3) connected with one another through heat transfer liquid;
a valve fitting (4) opening into each radiator plate (2, 3) for delivering heat transfer liquid to the radiator plate;
a valve fitting (5) discharging heat transfer liquid from each radiator plate (2, 3);
a thermostat (7) arranged to control opening and closing of the valve fitting (4) opening into at least one radiator plate (2);
the thermostat (7) comprising a control member for opening and closing a valve stem (9) of the valve fitting (4) connected with the thermostat,
**characterized in that**
a first liquid-filled element (10) expanding in an axial direction of the valve stem is arranged between the control member (8) of the thermostat (7) and the valve stem (9) of the valve fitting (4) connected therewith;
a second liquid-filled element (12) expanding in the axial direction of the valve stem is arranged on top of the valve stem of the valve fitting opening into at least one second radiator plate (3) and/or the valve stem of the valve fitting (5) discharging heat transfer liquid from at least one second radiator plate (3); and
a liquid line (13) is connected between the expanding elements (10, 12) which enables a reciprocating liquid flow therebetween for alternately expanding and contracting the expanding elements and thus for opening and closing, controlled by the thermostat, at least one valve fitting of said second radiator plate (3).

2. A radiator arrangement as claimed in claim 1, **characterized in that**
the first expanding element (10) is arranged inside a plunger cup (14) open in a direction of the valve stem (9) of the valve (6) provided in the valve fitting (4) connected thereto and being movable in a support sleeve (15) axially arranged between the valve and the plunger cup, the control member (8) of the thermostat (7) being in engagement with a plunger surface of the plunger cup facing away from the valve stem; and
the second expanding element (12) is arranged inside a dome (16) open in a direction of the valve stem of a valve (11) provided in the valve fitting (5) connected thereto and fastened immovably on top of the valve fitting.

3. A radiator arrangement as claimed in claim 1 or 2, **characterized in that** the second expanding element (12), controlled by the thermostat (7), is arranged on top of the valve stem of the valve (11) provided in the valve fitting (5) discharging heat transfer liquid from the second radiator plate (3).

4. A radiator arrangement as claimed in any one of claims 1 to 3, **characterized in that** it comprises
a front radiator plate (2) designed to face a space to be heated,
a rear radiator plate (3) designed to reside behind the front radiator plate (2), on the side of a wall or a corresponding fastening surface of the space to be heated,
a stop valve (11) provided in the valve fitting (5) for discharging heat transfer liquid from the radiator arrangement and located in a lower part of and between the radiator plates (2, 3) for adjusting the amount of heat transfer liquid being discharged from the rear radiator plate (3), the second expanding element (12) being arranged on top of the valve stem of this stop valve.

5. A radiator arrangement as claimed in any one of claims 1 to 4, **characterized in that** the expanding elements (10, 12) are bellows structures.

6. A radiator arrangement, comprising
at least two radiator plates (2, 3) connected with one another through heat transfer liquid;
a valve fitting (4) opening into each radiator plate (2, 3) for delivering heat transfer liquid to the radiator plate;
a valve fitting (5) discharging heat transfer liquid from each radiator plate (2, 3);
a thermostat (7) arranged to control opening and closing of the valve fitting (4) opening into at least one radiator plate (2);
the thermostat (7) comprising a control member (8) for opening and closing a valve stem (9) of the valve fitting (4) connected with the thermostat, the control member (8) including a liquid-filled pressure element (17) sensitive to influence of heat,
**characterized in that**
a liquid-filled element (12) expanding in an axial direction of the valve stem is arranged on top of the valve stem of the valve fitting opening into at least one second radiator plate (3) and/or the valve stem of the valve fitting (5) discharging heat transfer liquid from at least one second radiator plate (3); and
a liquid line (13) is connected between the pressure element (17) of the thermostat (7) and the expanding element (12) which enables a reciprocating liquid flow therebetween for expanding or contracting the pressure element and the expanding element and thus for opening and closing, controlled by the thermostat (7), at least one valve fitting (5) of said second radiator plate (3).

7. A radiator arrangement as claimed in claim 6, **characterized in that**
the expanding element (12) is arranged inside a dome (16) open in a direction of the valve stem of a valve (11) provided in the valve fitting (5) connected thereto and fastened immovably on top of the valve fitting (5).

8. A radiator arrangement as claimed in claim 6 or 7, **characterized in that** the expanding element (12) is arranged on top of the valve stem of the valve (11) provided in the valve fitting (5) discharging heat transfer liquid from the second radiator plate (3).

9. A radiator arrangement as claimed in any one of claims 6 to 8, **characterized in that** it comprises
a front radiator plate (2) designed to face a space to be heated,
a rear radiator plate (3) designed to reside behind the front radiator plate (2), on the side of a wall or a corresponding fastening surface of the space to be heated,
a stop valve (11) provided in the valve fitting (5) for discharging heat transfer liquid from the radiator arrangement and located in a lower part of and between the radiator plates (2, 3) for adjusting the amount of heat transfer liquid being discharged from the rear radiator plate (3), the expanding element (12) being arranged on top of the valve stem of this stop valve.

10. A radiator arrangement as claimed in any one of claims 6 to 9, **characterized in that** the expanding element (12) is a bellows structure.
